# EUROPÄISCHE PATENTANMELDUNG

(11) **EP 1 076 410 A2**
(43) Veröffentlichungstag der Anmeldung: **14.02.2001**
(21) Anmeldenummer: 00202341.4
(22) Anmeldetag: 03.07.2000
(51) Int. Cl.: H02P 7/628

(54) **Verfahren zum Regeln eines elektrischen Lenkungs- oder Antriebsmotors**

(30) Priorität: 10.08.1999 DE 19937703
(71) Anmelder: Sauer-Danfoss (Nordborg) A/S, 6430 Nordborg (DK)
(72) Erfinder: Frederiksen, Torben, 6440 Augustenborg (DK)

(57) **Zusammenfassung**

Es wird Verfahren angegeben zum Regeln eines elektrischen Lenkungs- oder Antriebsmotors eines Flurförderfahrzeugs, bei dem ein eine Temperatur des Motors oder seiner Steuereinrichtung darstellender Parameter ermittelt wird, dieser Parameter mit einem Grenzwert verglichen wird und bei Erreichen des Grenzwertes das Betriebsverhalten des Motors geändert wird.

Hierbei möchte man den Motor unter Beibehaltung seiner grundsätzlichen Funktionen schützen können.

Das Verfahren löst diese Aufgabe dadurch, daß man in die Drehzahlsteuerung des Motors eingreift, wobei zur Änderung des Betriebsverhaltens eine Änderungsgeschwindigkeit der Drehzahl herabgesetzt wird.

## Beschreibung

Die Erfindung betrifft ein Verfahren zum Regeln eines elektrischen Lenkungs- oder Antriebsmotors eines Flurförderfahrzeugs, bei dem ein eine Temperatur des Motors oder seiner Steuereinrichtung darstellender Parameter ermittelt wird, dieser Parameter mit einem Grenzwert verglichen wird und bei Erreichen des Grenzwertes das Betriebsverhalten des Motors geändert wird.

Flurförderfahrzeuge werden in vielen Fällen mit elektrischen Antriebs- und/oder Lenkungsmotoren ausgestattet. Der Energievorrat wird in Form einer Batterie mitgeführt. Seit einiger Zeit verwendet man als Elektromotor einen Induktionsmotor, insbesondere einen Asynchronmotor, anstelle der früher oft verwendeten Gleichstrommotoren.

Diese Art von Flurförderfahrzeugen sind in der Regel mit Frequenzumrichtern bestückt, die die Batteriespannung mittels eines Wechselrichters in eine drei oder mehrphasige Wechselspannung umformen.

Die Entwicklung geht dahin, die Antriebe für die Lenkung oder für den Vortrieb immer weiter zu verkleinern. Die Verkleinerung kann die Abmessungen oder das Gewicht oder beides betreffen.

Ein Weg, um kompaktere Lenk- oder Traktionsantriebe zu schaffen, besteht in der Verwendung sogenannter Kompaktantriebe. Hier sind der Elektromotor, die dazu gehörige Steuerelektronik und ein gegebenenfalls vorhandenes Getriebe in einem Gehäuse vereint. Allerdings bringt dieser relativ kompakte Zusammenbau ein thermisches Problem mit sich, da jedes dieser Teile normalerweise eine gewisse Wärme produziert. Die Antriebseinheit wird dann zu heiß, was in erster Linie die Steuerelektronik und hier in erster Linie die Wechselrichterschaltung bedroht. Die maximal zulässige Temperatur wird hierbei in der Regel mit 85°C angenommen. Bei einer höheren Temperatur wird das Schmieröl des Getriebes gefährdet, das maximal bis 120°C belastbar ist. Die Wicklungen des Stators des Elektromotors halten etwa 150°C aus. Um die entsprechenden Komponenten zu schützen, muß man entweder den ganzen Antrieb abschalten oder zumindest die elektrische Leistung absenken. Hierbei verwendet man vorzugsweise das Drehmoment als Größe, weil dieses über den Strom relativ einfach zu steuern ist.

Ein Verfahren der eingangs genannten Art ist aus EP 0 566 795 B1 bekannt. Dort ist ein Überwachungssystem für ein batteriebetriebenes Fahrzeug beschrieben, das unter anderem die Motortemperatur und die Temperatur an den Leistungsschaltern der Steuerelektronik mißt. Diese Temperaturen werden mit Grenzwerttemperaturen verglichen. Beim Überschreiten dieser Grenzwerte wird eine begrenzende Funktion aktiviert, die das Ausgangsmoment des Motors proportional zur Größe der Überschreitung abfallen läßt. Diese Vorgehensweise zum Schutz eines Lenkmotors und dessen Antrieb hat aber den Nachteil, daß die Lenkeigenschaften stark beeinträchtigt werden. Wenn man nämlich das Moment immer weiter vermindert, kann der Fall auftreten, daß das Ausgangsmoment kleiner als das Lastmoment oder sogar zu Null wird und damit ganz wegfällt. Dies kann im Betrieb durchaus kritische Situationen hervorrufen.

EP 0 664 273 A1 beschreibt einen elektrisch angetriebenen Gabelstapler, dessen Antriebsmotor bei Überhitzung abgeschaltet wird. Dies mag noch akzeptabel sein, wenn man den Motor lediglich zum Vortrieb verwendet. In diesem Fall bleibt das Fahrzeug einfach stehen. Kritisch wird die Situation aber dann, wenn ein derartiger Motor zum Lenken verwendet werden soll. Wenn das Lenken plötzlich unterbleibt, weil der Motor zu heiß geworden ist, kann dies zu gefährlichen Situationen führen.

EP 0 247 996 A zeigt einen Drehstrommotor mit Überhitzungsschutzeinrichtung. In diesem Fall wird ein dem aufgenommenen Motorstrom proportionales Signal aufintegriert und das so erhaltene Summensignal ständig mit einem Vergleichspegel verglichen. Bei Überschreitung des Vergleichspegels durch das aufintegrierte Summensignal wird die Stromzufuhr zum Motor unterbrochen.

Der Erfindung liegt die Aufgabe zugrunde, unter Beibehaltung der Lenk- und/oder Traktionseigenschaften des Flurförderfahrzeugs einen Schutz des Antriebs bzw. des Motors bei hohen Temperaturen zu erreichen.

Diese Aufgabe wird bei einem Verfahren der eingangs genannten Art dadurch gelöst, daß man in die Drehzahlsteuerung des Motors eingreift, wobei zur Änderung des Betriebsverhaltens eine Änderungsgeschwindigkeit der Drehzahl herabgesetzt wird.

Hierbei macht man sich die Erkenntnis zunutze, daß eine Überhitzung des Motors und seiner Steuerkomponenten in der Regel dann auftritt, wenn der Antrieb eine Beschleunigung im positiven oder negativen Sinne leisten muß. Solange der Antrieb mit einer konstanten Drehzahl arbeitet, wird zwar ebenfalls Wärme erzeugt. Diese Wärme ist aber normalerweise beherrschbar. Temperaturspitzen treten, wie gesagt, hauptsächlich bei Beschleunigungen auf. Wenn man nun über die Drehzahlsteuerung dafür sorgt, daß die Änderungsgeschwindigkeit der Drehzahl, also die Beschleunigung, herabgesetzt wird, dann kann man einen gewissen Anteil der Wärmemenge vermeiden. Die Betriebseigenschaften des Fahrzeugs werden zwar verschlechtert. Beispielsweise kann das Fahrzeug nicht mehr so schnell beschleunigen, oder die Lenkbewegung erfolgt langsamer. Abgesehen von der verschlechterten Dynamik behält das Fahrzeug aber alle seine bisherigen Eigenschaften.

Bevorzugterweise ist ein erster Betriebsmodus vorgesehen, der verwendet wird, wenn der Parameter kleiner als der Grenzwert ist und in dem eine Drehzahländerung durch einen ersten Gradienten begrenzt ist, und ein zweiter Betriebsmodus ist vorgesehen, der verwendet wird, wenn der Parameter gleich oder größer als der Grenzwert ist und in dem eine Drehzahländerung durch einen zweiten Gradienten begrenzt ist, der kleiner als der erste Gradient ist. In diesem Fall kann man die Steuerung relativ einfach bewirken. Beim Erreichen des Grenzwertes ist lediglich ein Umschalten vom ersten auf den zweiten Betriebsmodus notwendig. Auch im ersten Betriebsmodus ist die Drehzahländerung des Motors nicht beliebig groß. Diese Begrenzung kann beispielsweise durch die jedem mechanischen System innewohnende Trägheit bestimmt sein. Der zweite Gradient ist aber durch die Steuereinrichtung vorgegeben, d.h. hier wird die Änderungsgeschwindigkeit der Drehzahl tatsächlich willkürlich begrenzt.

Vorzugsweise wechselt man bei Unterschreiten des Grenzwertes vom zweiten in den ersten Betriebsmodus. Damit handelt es sich sozusagen um eine Zweipunktsteuerung. Oberhalb des Grenzwertes wird der zweite Betriebsmodus verwendet. Unterhalb des Grenzwertes wird der erste Betriebsmodus verwendet. Gegebenenfalls kann man hier auch noch eine kleine Hysteresefunktion vorsehen, so daß das Umschalten vom zweiten auf den ersten Betriebsmodus erst dann erfolgt, wenn der Parameter um einen vorbestimmten Wert unter den Grenzwert gesunken ist.

Vorzugsweise wird als Parameter eine Temperatur im Motor oder in seiner Steuereinrichtung gemessen. Zur Messung können beispielsweise elektrische Bauelemente, wie PTC-Widerstände, verwendet werden. Die Temperatur erlaubt eine unmittelbare Aussage über die Gefährdung der einzelnen Bauelemente. In der Regel reicht es aus, die Temperatur an einer oder mehreren Stellen des Motors oder der Steuereinrichtung zu messen, weil man dann auf Temperaturen an gegebenenfalls heißeren Stellen schließen kann.

Alternativ oder zusätzlich kann zur Ermittlung des Parameters ein Strom-Zeit-Integral ausgewertet werden. Auch hieraus ergibt sich eine Aussage über die Wärmebelastung des Antriebs.

In einer besonders bevorzugten Ausgestaltung ist vorgesehen, daß Steuersignale, die von einer Bedienungsperson abgegeben werden, tiefpaßgefiltert werden. Diese Ausgestaltung läßt sich auch isoliert bei einem Verfahren der eingangs genannten Art zur Lösung der Aufgabe verwenden. Bei Flurförderfahrzeugen, die auf einem unebenen Untergrund bewegt werden, läßt sich beobachten, daß der Fahrer aufgrund von Rüttelbewegungen kleinere Ausschläge am Lenkhandrad oder am Fahrpedal vornimmt. Mit diesen Ausschlägen ist an und für sich keine Steuerungsabsicht verbunden. Diese Ausschläge sind lediglich eine Reaktion auf die Bewegungen des Fahrzeugs, die der Fahrzeugführer mit entsprechenden Gegenbewegungen seines Körpers auszugleichen versucht. Trotzdem versucht die Steuerelektronik die Steuersignale, die von diesen an und für sich unerwünschten Steuerbewegungen hervorgerufen werden, in entsprechende Signale an den Motor umzusetzen. Wenn man die Steuersignale tiefpaßfiltert, kann man derart kurzzeitige Ausschläge von Bedienungselementen weitgehend entschärfen. Sie führen dann nicht mehr in einem so starken Maße zu einer Erwärmung der Antriebseinheit. Mit einem derartigen Tiefpaßfilter wird auch die Änderungsgeschwindigkeit, also der Gradient der Drehzahl, geändert

Die Erfindung wird im folgenden anhand eines bevorzugten Ausführungsbeispiels in Verbindung mit der Zeichnung näher beschrieben. Hierin zeigen:
- Fig. 1: eine schematische Außenansicht eines Kompaktantriebs,
- Fig. 2: eine schematische Schaltungsanordnung und
- Fig. 3: verschiedene Zeitverläufe von Signalen und Parametern.

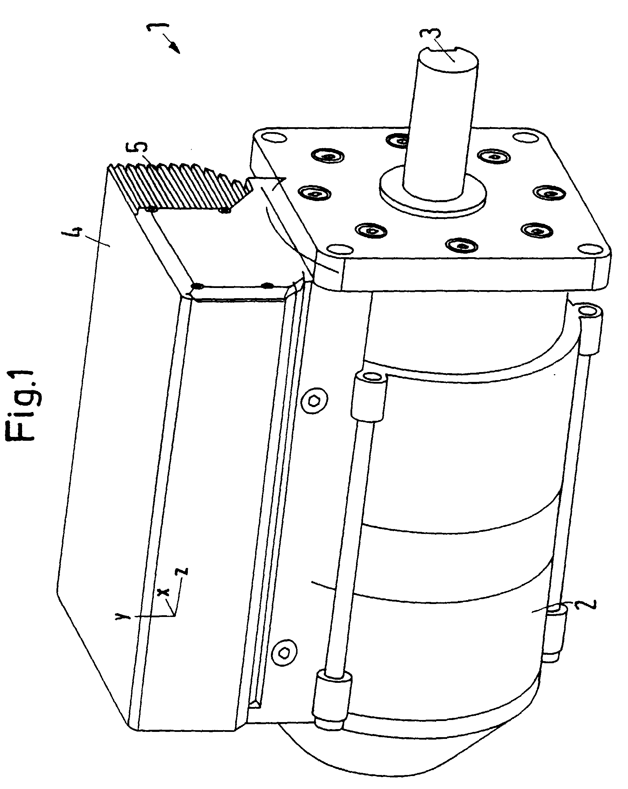

Fig. 1 zeigt einen Kompaktantrieb 1, der ein Gehäuse 2 aufweist, in dem ein Elektromotor und daran angeflanscht ein Getriebe angeordnet sind. Das Getriebe weist eine Ausgangswelle 3 auf. Auf dem Gehäuse 2 für Motor und Getriebe befindet sich ein Gehäuse 4 für eine Steuerelektronik, mit deren Hilfe der Motor im Gehäuse angesteuert wird. Das Gehäuse ist zumindest auf einer Seite mit Kühlrippen 5 versehen, um die Wärmeabfuhr zur Umgebungsluft hin zu verbessern.

Es liegt auf der Hand, daß thermische Probleme entstehen können, wenn sowohl der Motor und das Getriebe im Gehäuse 2 als auch die Steuerelektronik im Gehäuse 4 Wärme erzeugen. Wenn man nun die Entstehung der Wärme vermeiden oder zumindest verringern kann, dann kann man die Kühlrippen 5 einfacher ausgestalten oder sogar ganz weglassen. Unter Umständen kann man auch einen normalerweise vorhandenen Kühlventilator weglassen, was wiederum eine Verkleinerung des Kompaktantriebes bedeutet.

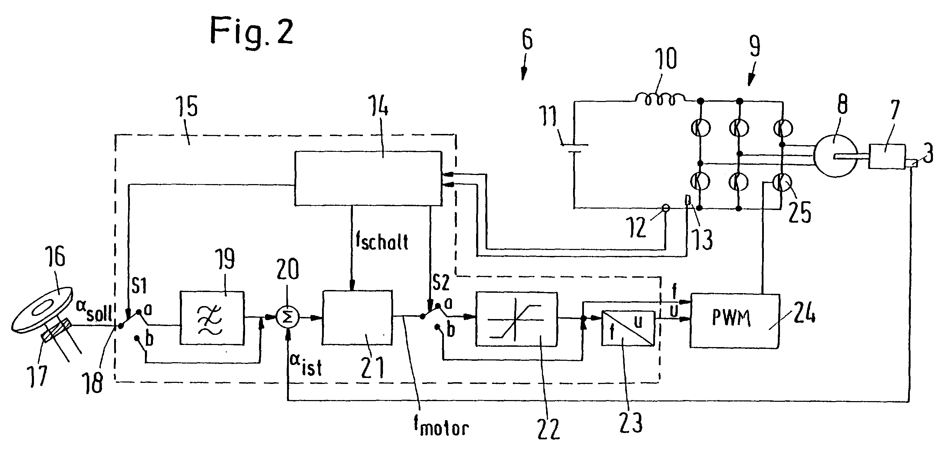

Fig. 2 zeigt nun schematisch ein Blockschaltbild 6. Dargestellt ist das Blockschaltbild 6 für einen Lenkantrieb. Die Gehäuse sind hier weggelassen. Eine entsprechend modifizierte Schaltungsanordnung kann für einen Traktionsantrieb verwendet werden.

Die Ausgangswelle 3 wird über ein Getriebe 7 vom Motor 8 angetrieben. Der Motor 8 wird wiederum von einem Wechselrichter 9 angetrieben, der über einen Zwischenkreis 10 oder auch direkt von einer Batterie 11 gespeist wird. Im Zwischenkreis ist ein Stromsensor 12 und in der unmittelbaren Nähe des Wechselrichters 9 ist ein Temperaturfühler 13 angeordnet, die ihre Ausgangssignale einer Schutzsteuerung 14 übermitteln, die in einem Mikrocontroller 15 angeordnet ist.

Ein Lenkhandrad 16 ist mit einem Lenkhandradsensor 17 versehen, dessen Ausgangswinkel αₛₒₗₗ an einen Eingang 18 des Mikrocontrollers 15 geführt ist, Dieser Eingang ist mit einem Schalter S1 verbunden, der von der Schutzsteuerung 14 betätigt wird. Ein erster Ausgangskontakt a des Schalters S1 ist mit einem Tiefpaßfilter 19 verbunden, dessen Ausgang mit einem Summationspunkt 20 verbunden ist. Der andere Ausgangsanschluß b des Schalters S1 ist unter Umgehung des Tiefpaßfilters mit dem gleichen Eingang des Summationspunktes 20 verbunden. Dem Summationspunkt 20 wird außerdem ein Winkel αᵢₛₜ zugeführt, der aus der Stellung der Ausgangswelle 3 ermittelt wird. Ein hierzu vorgesehener Lenkwellensensor ist nicht näher dargestellt.

Der Ausgang des Summationspunktes 20 wird einem Controller 21 zugeführt, der von der Schutzsteuerung 14 ein Signal f_{schalt} erhält. Der Controller 21 erzeugt aus dem Ausgangssignal des Summationspunktes 20 und dem Signal f_{schalt} ein Signal fₘₒₜₒᵣ, das einem zweiten Schalter S2 zugeführt wird.

Ein Ausgang a des Schalters S2 ist mit einem Begrenzer 22 verbunden, dessen Ausgang mit einem Frequenz-Spannungs-Wandler 23 verbunden ist. Der andere Ausgang b des Schalters S2 ist unter Umgehung des Begrenzers 22 mit dem gleichen Eingang des Frequenz-Spannungs-Wandlers 23 verbunden. Der Ausgang des Begrenzers ist weiterhin mit einem Pulsbreitenmodulator 24 verbunden, der den Wechselrichter 9 steuert. Auch der Ausgang des Frequenz-Spannungs-Wandlers 23 ist mit dem Pulsbreitenmodulator 24 verbunden. Aus Gründen der Übersicht ist dargestellt, daß der Pulsbreitenmodulator 24 nur mit einem Halbleiterschalter 25 des Wechselrichters 9 verbunden ist. Üblicherweise sind aber alle Halbleiterschalter des Wechselrichters 9 gesteuert.

Auch der zweite Schalter S2 wird von der Schutzsteuerung 14 betätigt.

Als Eingangssignal der Schutzsteuerung 14 dient die Temperatur, die über den Temperaturfühler 13 ermittelt wird. Es können auch mehrere Temperaturfühler verwendet werden, die z.B. im Stator des Motors oder im Getriebe 7 angebracht sind. Man könnte die Temperatur oder einen damit korrelierenden Parameter auch errechnen, indem man zum Beispiel den Motorstrom über die Zeit mißt und ein an sich bekanntes Strom-Zeit-Integral bildet. Die Strommessung wird in Fig. 2 im Zwischenkreis vorgenommen. Das Strom-Zeit-Integral wird in der Schutzsteuerung 14 berechnet und dient als Ausdruck für die Leistung, die in den Halbleiterschaltern 25 umgesetzt wird. Hieraus läßt sich die Temperaturerhöhung herleiten. Bei einem zu großen Strom-Zeit-Integral würden die Schalter 25 zerstört. Die Schutzschaltung 14 reagiert deshalb in der gleichen Weise, wenn ein Temperaturfühler 13 einen zu hohen Wert anzeigt oder wenn ein zu hohes Strom-Zeit-Integral errechnet wird.

Normalerweise befinden sich die Schalter S1 und S2 in der Stellung b, d.h. die Signale vom Lenkhandradsensor 17 gelangen unter Umgehung des Tiefpaßfilters 19 zum Summationspunkt 20. Die Ausgangssignale fₘₒₜₒᵣ des Controllers 21 gelangen unter Umgehung des Begrenzers 22 zum Frequenz-Spannungs-Wandler 23. Wenn der Lenkhandradsensor einen Drehwinkel αₛₒₗₗ vorgibt, wird eine Differenz zwischen dem Sollwert αₛₒₗₗ und dem tatsächlichen Winkel αᵢₛₜ der Ausgangswelle 3 berechnet. Im Controller 21 wird daraus die Ausgangsfrequenz fₘₒₜₒᵣ berechnet und über den Ausgangskontakt b des Schalters S2 an den Pulsbreitenmodulator 24 geleitet.

Die Beschleunigung beziehungsweise das Abbremsen in dem normalen Betriebsmodus (im folgenden "erster Betriebsmodus") verläuft nach einem festen, im Controller 21 vorgegebenen ersten Gradienten, d.h. die Änderung der Drehzahl, die der Motor 8 vornehmen kann, ist auf eine vorgegebene Geschwindigkeit begrenzt.

Falls nun der Motor, die Steuerelektronik oder das Getriebe zu heiß wird, was durch einen erhöhten Temperaturwert festgestellt oder aus dem Strom-Zeit-Integral ermittelt werden kann, dann wird der Schalter S2 aktiviert, und, wie in Fig. 2 dargestellt, auf den Kontakt a umgeschaltet. Jetzt ist der Begrenzer 22 aktiv und senkt die Änderungsgeschwindigkeit des Motorsignals fₘₒₜₒᵣ ab, d.h. er erstellt einen zweiten Gradienten, der kleiner als der erste Gradient ist. Die Änderungsgeschwindigkeit der Drehzahl des Motors 8 folgt also einer kleineren Steigung. Der Lenkmotor 8 wird in seiner Geschwindigkeit langsamer anfahren, zugleich wird aber auch weniger Wärme erzeugt. Die größtmögliche Änderung der Drehzahl in diesem "Störungsfall" wird mit "zweiter Betriebsmodus" bezeichnet.

In einem Versuch wurde nun die als Wärme abgegebene Leistung im ersten Betriebsmodus und im zweiten Betriebsmodus verglichen, wobei im ersten Betriebsmodus der Gradient so eingestellt war, daß eine Drehzahl von 4000 U/min in 0,1 Sekunden erreicht wurde, während im zweiten Betriebsmodus hierfür 0,3 Sekunden erforderlich waren. Im ersten Betriebsmodus war die abgegebene Wärmeleistung 35,7 Watt, und im zweiten Betriebsmodus betrug sie 30,3 Watt. Das entspricht einer Verminderung der Temperatur der Halbleiter von 8°C, was insbesondere bei Kompaktantrieben signifikant ist.

Um die Verlustleistung noch weiter zu vermindern und damit einer weiteren Temperaturerhöhung entgegenzuwirken, kann zusätzlich zu dem kleineren Gradienten beim Beschleunigen und Bremsen der Tiefpaßfilter 19 verwendet werden. In Fig. 2 ist dieser Filter in den Signalweg des Sollwertes αₛₒₗₗ vom Lenkhandrad 16 eingesetzt. Der Tiefpaßfilter 19 ist vorzugsweise digital ausgeführt, d.h. er kann auch in den Mikrocontroller eingebaut sein.

Es hat sich nämlich gezeigt, daß relativ viel elektrische Leistung unnötig verbraucht wird, weil auf dem Lenksignal (αₛₒₗₗ) Störimpulse auftreten. Diese Störimpulse stammen oft vom Fahrer, der mit dem Lenkhandrad 16 kleine, für die Fahrtrichtung unbedeutende Ausschläge macht, beispielsweise dann, wenn das Fahrzeug wackelt. Jeder dieser kleinen Ausschläge treibt aber den Lenkmotor 8 an und verursacht im Antrieb eine erhöhte Wärmeabgabe. Durch den Tiefpaßfilter 19 werden die kleinen Ausschläge "geglättet".

Um den Temperaturanstieg noch weiter zu vermindern, ist es möglich, die Schaltfrequenz des Wechselrichters abzusenken. Es ist bekannt, daß die Verluste in den Schaltern 25 im wesentlichen proportional zu der Schaltfrequenz sind, so daß eine Absenkung der Frequenz die Verluste mindert. In Verbindung mit der Verringerung des Beschleunigungsgradienten des Motors 8 läßt sich eine noch stärkere Verringerung der Wärmeerzeugung erreichen.

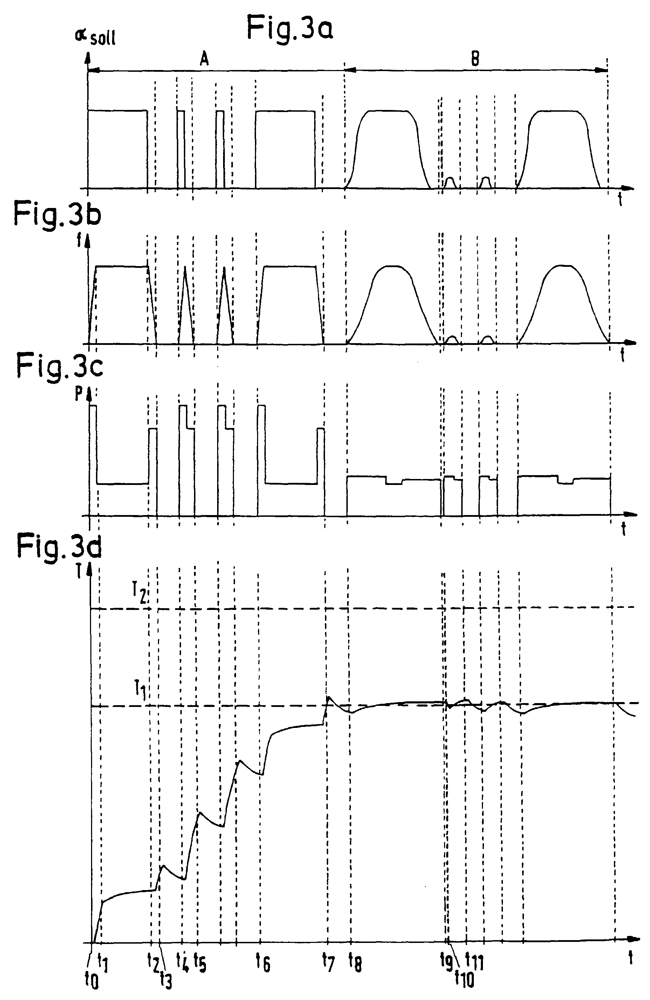

Die Auswirkungen des Verfahrens sollen nun anhand von Fig. 3 erläutert werden. Die Fig. 3a bis 3d haben eine gemeinsame Zeitachse. Fig. 3a stellt das Lenksignal αₛₒₗₗ am Eingang des Summationspunktes 20 in Fig. 2 dar. Fig. 3b zeigt die Frequenz f am Eingang des Pulsbreitenmodulators 24, mit anderen Worten die Umdrehungsgeschwindigkeit des Motors. Fig. 3c zeigt die gesamte Leistungsabgabe P des Kompaktantriebes 1 und Fig. 3d die Temperatur T an einer kritischen Stelle im Antrieb.

Zum Zeitpunkt t0 (Beginn der Zeitachse t) sind die Schalter S1 und S2 in der Stellung b. Im Zeitraum t0 bis t1 wird das Lenkhandrad 16 gedreht. Dies ist daran erkennbar, daß in Fig. 3a ein Sollwert αₛₒₗₗ gebildet wird, der wiederum in ein Referenzsignal f umgewandelt wird. Dieses Referenzsignal ist in Fig. 3b gezeigt. Im Zeitraum t0 bis t1 erfolgt also die Beschleunigung nach einem ersten Gradienten, was wiederum die in Fig. 3c gezeigte Leistungsabgabe P zur Folge hat. Es ist ohne weiteres ersichtlich, daß zur Beschleunigung des Motors 8 mit der in Fig. 3b gewünschten Charakteristik eine relativ hohe Leistung P und damit auch eine relativ große Verlustleistung verbunden ist.

Im Zeitraum von t1 bis t2 ist die gewünschte Umdrehungszahl des Motors 8 erreicht. Man kann erkennen, daß in dieser Periode die Amplitude der Leistungsabgabe wesentlich kleiner als während des Anlaufs ist. Zum Zeitpunkt t2 verschwindet das Sollwertsignal αₛₒₗₗ. Der Motor 8 des Kompaktantriebs 1 wird nach einer Ablauframpe von t2 bis t3 zum Stillstand gebracht. Auch in diesem Zeitraum steigt wieder die Amplitude der abgegebenen Leistung P. Sie erreicht aber nicht dieselbe Größe wie während der Beschleunigung. Dies hängt damit zusammen, daß beim Bremsen die Reibung zwischen Boden und Rad mithilft.

Fig. 3d zeigt, daß eine Temperaturerhöhung zwischen den Zeitpunkten t1 und t3 stattgefunden hat.

Zum Zeitpunkt t4 wackelt der Fahrer am Lenkhandrad 16. Dies ist zwar nicht erwünscht, trägt aber mit einer Leistungsabgabe zur Temperaturerhöhung bei. Dieses Wackeln wiederholt sich noch einmal, ohne daß hierfür ein getrennter Zeitpunkt erwähnt wird. Das Lenken kann sich nun wiederholt fortsetzen, wie beispielhaft zum Zeitpunkt t6 dargestellt. Man kann beobachten, daß die Temperatur des Lenkantriebs immer weiter ansteigt.

Es sei nun angenommen, daß zum Zeitpunkt t7 die Temperatur über einen Grenzwert T1 hinaus ansteigt. Die Schutzsteuerung 14 schaltet nun vom ersten Betriebsmodus A in den zweiten Betriebsmodus B um, indem sie die Schalter S1 und S2 betätigt und deren Ausgänge jeweils auf den Anschluß a legt. Vom Zeitpunkt t7 an sind also der Tiefpaßfilter 19 und der Begrenzer 22 aktiv. Die Wirkung des Tiefpaßfilters 19 ist in Fig. 3a ab dem Zeitpunkt t8 deutlich erkennbar. Insbesondere die unerwünschten kleinen Ausschläge (t10 bis t11) werden in ihren Amplituden stark abgesenkt. Bei schnellen Änderungen werden die Ausschläge somit auf fast Null vermindert.

Auch der Begrenzer ist aktiv und senkt die Beschleunigung und das Abbremsen ab, siehe Fig. 3b. Der Hochlauf des Motors 8 von t8 aus dauert deshalb länger in diesem Zweiten Betriebsmodus B als im ersten Betriebsmodus A. Das Fahrzeug bleibt aber steuerbar.

Im Prinzip könnte man auch mehrere Gradienten verwenden. Im Grunde genommen reicht aber ein einzelner Gradient aus, der auf den besten Wirkungsgrad hin optimiert wird.

In Fig. 3b ist vom Zeitpunkt t7 sowohl der Tiefpaßfilter 19 als auch der Begrenzer 22 aktiv. Sie können aber bei Bedarf auch nacheinander verwendet werden. Zusätzlich könnte die Schutzsteuerung 14 auch noch die Schaltfrequenz f_{schalt} absenken, z.B. von 20 kHz auf 3 kHz.

In Fig. 3d ist noch ein Grenzwert T2 eingezeichnet, der eine absolute Grenze bildet. Wenn die Temperatur diesen Grenzwert erreicht, muß der gesamte Antrieb sofort abgeschaltet werden. Innerhalb des Bandes T1 bis T2 läßt sich aber das Flurförderfahrzeug lenken und antreiben. Sobald die Temperatur wieder T1 unterschreitet, werden S1 und/oder S2 wieder in ihre Position b geschaltet.

## Patentansprüche

1. Verfahren zum Regeln eines elektrischen Lenkungs- oder Antriebsmotors eines Flurförderfahrzeugs, bei dem ein eine Temperatur des Motors oder seiner Steuereinrichtung darstellender Parameter ermittelt wird, dieser Parameter mit einem Grenzwert verglichen wird und bei Erreichen des Grenzwertes das Betriebsverhalten des Motors geändert wird, dadurch gekennzeichnet, daß man in die Drehzahlsteuerung des Motors eingreift, wobei zur Änderung des Betriebsverhaltens eine Änderungsgeschwindigkeit der Drehzahl herabgesetzt wird.

2. Verfahren nach Anspruch 1, dadurch gekennzeichnet, daß ein erster Betriebsmodus (A) vorgesehen ist, der verwendet wird, wenn der Parameter kleiner als der Grenzwert (T1) ist und in dem eine Drehzahländerung durch einen ersten Gradienten begrenzt ist, und ein zweiter Betriebsmodus (B) vorgesehen ist, der verwendet wird, wenn der Parameter gleich oder größer als der Grenzwert (T1) ist und in dem eine Drehzahländerung durch einen zweiten Gradienten begrenzt ist, der kleiner als der erste Gradient ist.

3. Verfahren nach Anspruch 2, dadurch gekennzeichnet, daß man bei Unterschreiten des Grenzwertes (T1) vom zweiten in den ersten Betriebsmodus (A) wechselt.

4. Verfahren nach einem der Ansprüche 1 bis 3, dadurch gekennzeichnet, daß als Parameter eine Temperatur im Motor (8) oder in seiner Steuereinrichtung gemessen wird.

5. Verfahren nach einem der Ansprüche 1 bis 4, dadurch gekennzeichnet, daß zur Ermittlung des Parameters ein Strom-Zeit-Integral ausgewertet wird.

6. Verfahren nach einem der Ansprüche 1 bis 5, dadurch gekennzeichnet, daß der Motor frequenzgesteuert wird.

7. Verfahren nach einem der Ansprüche 1 bis 6 oder dem Oberbegriff des Anspruchs 1, dadurch gekennzeichnet, daß Steuersignale, die von einer Bedienungsperson abgegeben werden, tiefpaßgefiltert werden.
